(19) Europäisches Patentamt
European Patent Office
Office européen des brevets

(11) Numéro de publication: **0 263 544 B1**

# (12) FASCICULE DE BREVET EUROPEEN

(45) Date de publication de fascicule du brevet: **18.12.91**

(51) Int. Cl.[5]: **C01B 13/32**, C01G 25/02, C01F 7/36

(21) Numéro de dépôt: **87201661.3**

(22) Date de dépôt: **03.09.87**

(54) **Procédé de fabrication d'une poudre pour matériaux céramiques, contenant au moins un oxyde métallique, et poudre formée d'au moins un oxyde métallique obtenue par ce procédé.**

(30) Priorité: **15.09.86 FR 8612968**

(43) Date de publication de la demande: **13.04.88 Bulletin 88/15**

(45) Mention de la délivrance du brevet: **18.12.91 Bulletin 91/51**

(84) Etats contractants désignés: **AT BE CH DE ES FR GB GR IT LI LU NL SE**

(56) Documents cités:
**EP-A- 0 065 863**
**EP-A- 0 072 995**
**EP-A- 0 234 647**
**US-A- 4 543 341**

(73) Titulaire: **SOLVAY & Cie (Société Anonyme)**
**Rue du Prince Albert, 33**
**B-1050 Bruxelles(BE)**

(72) Inventeur: **Legrand, Franz**
**Rue des Vaches, 71**
**B-7300 Quaregnon(BE)**
Inventeur: **De Bruycker, Patricia**
**Rue Henri Wafelaerts, 12**
**B-1060 Bruxelles(BE)**

(74) Mandataire: **Anthoine, Paul et al**
**SOLVAY & Cie Département de la Propriété Industrielle 310, rue de Ransbeek**
**B-1120 Bruxelles(BE)**

**EP 0 263 544 B1**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

L'invention a pour objet la fabrication de matériaux céramiques.

Elle concerne plus particulièrement un procédé pour la fabrication de poudres d'oxydes métalliques destinées à la mise en oeuvre de matériaux céramiques.

Il est bien connu que l'on peut préparer des poudres d'oxydes métalliques à partir de l'hydrolyse d'alcoolates métalliques. A cet effet, on prépare généralement une solution diluée d'un alcoolate métallique dans un alcool, et on verse dans celle-ci une solution alcoolique d'eau. La réaction est généralement opérée sous une atmosphère inerte d'azote, à la température ambiante. A l'issue du procédé, on recueille la poudre d'oxyde métallique qui a précipité (Better Ceramics Through Chemistry - Materials Research Society Symposia Proceedings - Vol. 32 - 1984 - Elsevier Science Publishing Co., Inc. - BRUCE FEGLEY et al : "Synthesis, characterization, and processing of monosized ceramic powders", pages 187 à 197).

On résume généralement l'hydrolyse des alcoolates métalliques selon ce procédé connu par un schéma hypothétique simplifié comprenant la formation d'un produit hydroxylé intermédiaire et la conversion de ce produit intermédiaire en l'oxyde métallique, selon les réactions suivantes :

$$M(OR)_n + nH_2O \text{ --> } M(OH)_n + nROH \quad (1)$$

$$M(OH)_n \text{ --> } MO_{n/2} + n/2\ H_2O \quad (2)$$

$$M(OR)_n + n/_2\ H_2O \text{ --> } MO_{n/2} + nROH$$

où M désigne un métal,

R désigne un groupement hydrocarboné,

n est un nombre égal à la valence du métal M dans l'alcoolate $M(OR)_n$.

(Materials Sciences and Engineering, 78 (1986). A. van Zyl et coll. "A chemical Reactor System for $TiO_2$ and $ZrO_2$ Powder Synthesis" - pages 217 à 222 (pages 218 et 219)).

En général, les poudres d'oxydes métalliques recueillies à l'issue du procédé connu décrit plus haut comportent des agglomérats, leur distribution granulométrique est dispersée et la forme des grains est irrégulière, ce qui est désavantageux pour la fabrication des matériaux céramiques.

Le document US-A-4543341 concerne un procédé dans lequel on traite une solution organique d'un alcoolate métallique avec de l'eau, de manière à hydrolyser l'alcoolate métallique et précipiter un oxyde métallique à l'état d'une poudre. Dans l'exemple 1 (concernant la préparation d'une poudre de dioxyde de titane), le rapport molaire eau/alcoolate métallique peut être égal à 3 ou être supérieur à 3 (colonne 3, ligne 22).

L'invention vise à remédier aux inconvénients cités plus haut. A cet effet, on a trouvé qu'en sélectionnant de manière appropriée la quantité d'eau mise en oeuvre pour hydrolyser les alcoolates métalliques, on parvient à obtenir des poudres d'oxydes métalliques à l'état de grains sphériques, réguliers, dans lesquelles les agglomérats sont fortement réduits, voire inexistants, et dont la distribution granulométrique est peu étendue.

En conséquence, l'invention concerne un procédé de fabrication d'une poudre pour matériaux céramiques, contenant au moins un oxyde métallique, dans lequel on traite une solution organique d'au moins un alcoolate métallique avec de l'eau dans des conditions réglées pour précipiter l'oxyde métallique à l'état d'une poudre; selon l'invention, le rapport molaire entre la quantité d'eau et la quantité d'alcoolate métallique mises en oeuvre est compris entre 0,5 et 0,9 fois la valence du métal de l'alcoolate métallique, et, pour traiter l'alcoolate métallique avec l'eau, on ajoute d'abord à l'alcoolate métallique une fraction de la quantité susdite d'eau, on réalise un mélange homogène de l'alcoolate avec ladite fraction d'eau avant qu'une germination débute, on soumet le mélange réactionnel résultant à un mûrissage, puis on lui ajoute le solde de ladite quantité d'eau.

Dans le cadre de l'invention, on entend désigner par matériaux céramiques, des matériaux inorganiques non métalliques, dont la mise en oeuvre au départ d'une poudre requiert des traitements à haute température, tels que des traitements de fusion ou de frittage (P. William Lee - "Ceramics" - 1961 - Reinhold Publishing Corp. - page 1; Kirk Othmer Enclyclopedia of Chemical Technology - Third edition - Volume 5 - 1979 - John Wiley & Sons, USA - pages 234 à 236 : "Ceramics, scope").

Dans le procédé selon l'invention, l'alcoolate métallique désigne tout composé dans lequel un métal est relié par l'intermédiaire d'un atome d'oxygène, à un groupement hydrocarboné tel qu'un groupement aromatique ou un groupement aliphatique linéaire branché ou cyclique, saturé ou insaturé, non substitué ou

substitué partiellement ou totalement. Les alcoolates métalliques à groupements aliphatiques sont spécialement recommandés; c à groupements aliphatiques saturés non substitués sont préférés, tels que, par exemple, les groupements méthyl, éthyl, n-propyl, iso-propyl, n-butyl et iso-butyl. Il convient d'éviter que l'alcoolate soit mis en présence d'humidité avant d'y ajouter l'eau de l'hydrolyse conformément à l'invention.

Suivant l'invention, pour hydrolyser l'alcoolate, on lui additionne une quantité d'eau telle que le rapport molaire entre cette quantité d'eau et la quantité d'alcoolate métallique soit inférieur au nombre n désignant la valence du métal M de l'alcoolate métallique dans les équations chimiques (1) et (2) décrites plus haut. La quantité optimum d'eau à mettre en oeuvre dépend de divers paramètres, notamment du métal de l'alcoolate, du groupement hydrocarboné de l'alcoolate et de la dimension recherchée pour les particules de l'oxyde métallique. On a en effet trouvé qu'il est possible d'agir, dans certains limites, sur le diamètre moyen des particules de l'oxyde métallique produit, en modifiant le rapport molaire précité. En règle générale, on choisit un rapport molaire inférieur à 0,95 fois la valence du métal de l'alcoolate métallique, les rapports molaires compris entre 0,5 et 0,9 fois cette valence étant les plus appropriés.

Dans le procédé selon l'invention, l'hydrolyse peut être effectuée dans l'air ambiant. Pour éviter le risque d'une décomposition incontrôlée de l'alcoolate métallique, il est toutefois préférable de l'exécuter sous une atmosphère gazeuse exempte d'humidité. L'air sec, déshydraté, l'azote et l'argon sont des exemples d'atmosphères utilisables conformément à l'invention. Il est par ailleurs souhaitable que le mélange réactionnel soit exempt de composés basiques ou acides.

En principe, la température et la pression ne sont pas critiques. En général, dans la majorité des cas, on peut travailler à la température ambiante et la pression atmosphérique normale.

Dans l'exécution du procédé selon l'invention, il est recommandé de réaliser un mélange homogène de l'alcoolate avec l'eau le plus rapidement possible après l'addition de l'eau à l'alcoolate, avant que débute la nucléation. A cet effet, l'alcoolate et l'eau sont avantageusement mis en oeuvre à l'état de solutions organiques. Le cas échéant, il est opportun que le solvant organique de l'alcoolate soit exempt d'eau. On peut utiliser des solvants organiques identiques ou différents pour l'alcoolate, d'une part, et pour l'eau, d'autre part. Dans le cas où l'alcoolate et l'eau sont dissous dans des solvants organiques différents, il convient généralement de choisir des solvants organiques miscibles. Les alcools et leurs dérivés conviennent généralement bien, notamment le méthanol, l'éthanol, le n-propanol, l'iso-propanol, le n-butanol et l'iso-butanol.

Les taux de dilution optimum de l'alcoolate et de l'eau dans leurs solvants organiques respectifs dépendent de divers facteurs, notamment de l'alcoolate mis en oeuvre, de la température de travail, du taux de turbulence du milieu réactionnel et de la qualité recherchée pour la poudre d'oxyde métallique; ils doivent être déterminés dans chaque cas particulier par un travail de routine au laboratoire. En règle générale, on recommande que la solution organique de l'alcoolate et la solution organique d'eau contiennent respectivement moins de 2 moles d'alcoolate métallique par litre et moins de 5 moles d'eau par litre. Des concentrations molaires spécialement avantageuses sont celles comprises entre 0,05 et 1 pour la solution d'alcoolate métallique et entre 0,1 et 3 pour la solution organique d'eau.

Dans le procédé selon l'invention, l'eau destinée à l'hydrolyse peut être ajoutée en une seule fois à l'alcoolate métallique.

Dans une forme d'exécution modifiée du procédé selon l'invention, la quantité d'eau destinée à l'hydrolyse est ajoutée en deux étapes successives à l'alcoolate. A cet effet, dans une première étape, on ajoute une fraction de la quantité d'eau à l'acoolate, on soumet le mélange réactionnel résultant à un mûrissage, puis, dans une seconde étape, on lui ajoute le solde de la quantité totale d'eau. Dans cette forme d'exécution du procédé selon l'invention, la première étape et le mûrissage ont pour fonction de provoquer une germination de l'oxyde métallique avant la seconde étape. A cet effet, la fraction d'eau de la première étape est généralement comprise entre 45 et 85 % de la quantité totale d'eau mise en oeuvre aux deux étapes; les fractions d'eau comprises entre 60 et 80 % de la quantité totale d'eau sont préférées. L'addition de l'eau à la première étape doit être opérée de manière à réaliser un mélange homogène de l'alcoolate avec l'eau avant que la germination débute. La durée du mûrissage doit être réglée pour permettre la formation de germes d'oxyde métallique, en évitant une croissance substantielle de ces germes. Elle dépend de divers paramètres, notamment de la nature de l'alcoolate métallique mis en oeuvre, de la température de travail et de la fraction d'eau utilisée à la première étape d'hydrolyse. Elle doit être déterminée dans chaque cas particulier par des essais de routine au laboratoire. En pratique, en fonction de la température de travail sélectionnée, on la fixe entre quelques secondes et 120 minutes. Des durées de mûrissage n'excédant pas 60 minutes s'imposent habituellement lorsque le mûrissage est opéré à la température ambiante de 15 à 25° C; les durées de mûrissage comprises entre 1 et 30 minutes sont les plus fréquentes.

L'oxyde métallique obtenu à l'issue du procédé selon l'invention est généralement à l'état amorphe, hydraté et se présente à l'état d'une poudre de fines particules généralement sphériques, dont le diamètre n'excède pas 5 microns et est habituellement compris entre 0,05 et 2 microns.

La poudre peut éventuellement subir un séchage et un traitement thermique à une température appropriée, pour éliminer les résidus organiques, l'eau et les solvants organiques qui l'imprègnent. Le traitement thermique peut être réglé pour contrôler la porosité ou l'éliminer complètement. Il peut par ailleurs être réglé pour provoquer une cristallisation de la poudre d'oxyde métallique.

Le procédé selon l'invention s'applique indifféremment à l'hydrolyse d'un alcoolate métallique unique ou à la cohydrolyse de plusieurs alcoolates de métaux différents, pour obtenir alors des poudres d'oxydes métalliques mixtes. Il est spécialement adapté à l'hydrolyse d'alcoolates des métaux appartenant aux groupes III et IV du tableau périodique des éléments, tels que, par exemple, le silicium, l'aluminium et le zirconium. Il trouve une application spécialement avantageuse pour la production de poudres de silice, d'alumine et de zircone, et tout spécialement pour la production de poudres mixtes de zircone et d'oxyde d'yttrium.

L'invention concerne dès lors aussi des poudres d'au moins un oxyde métallique, obtenues par le procédé selon l'invention et formées de grains sphériques dont le diamètre n'excède pas 5 microns et est de préférence compris entre 0,05 et 2 microns.

Les quelques exemples dont la description va suivre servent à illustrer l'invention. Ces exemples sont donnés en référence aux figures annexées qui sont cinq reproductions photographiques de poudres de zircone, au grossissement 20000X.

Exemple 1 (conforme à l'invention)

Dans une chambre de réaction maintenue sous atmosphère d'azote anhydre à 25 °C, on a introduit 100 ml d'une solution 0,2 M de n-butoxyde de zirconium (IV) dans de l'éthanol. En maintenant cette solution sous forte agitation, on y a introduit 60 ml d'une solution 0,7 M d'eau dans de l'éthanol à 100 ml d'une solution 0,2 M de n-butoxyde de zirconium (IV). On a soumis le mélange réactionnel à un mûrissage sous agitation lente, pendant 140 secondes. On y a ensuite ajouté, sous forte agitation et en une fois, 40 ml de la solution d'eau précitée et on a fait subir au mélange réactionnel un mûrissage de 2 heures, sous agitation lente. Le rapport molaire entre la quantité totale d'eau et la quantité de butoxyde de zirconium a été égale à 3,5, soit 0,875 fois la valence du zirconium.

La poudre de zircone recueillie à l'issue du mûrissage a été lavée avec de l'éthanol anhydre puis séchée au moyen d'un courant d'azote sec à la température ambiante. La poudre de zircone obtenue est représentée à la figure 1.

Exemple 2 (de référence)

A titre de comparaison, on a procédé à l'hydrolyse d'alcoolate de zirconium (IV) en mettant en oeuvre des quantités d'eau et d'alcoolate de zirconium qui soient dans un rapport molaire supérieur à 4 (valence du zirconium).

A cet effet, en opérant comme à l'exemple 1, on a jouté, en une fois, 100 ml d'une solution 0,5 M d'eau dans de l'éthanol à 100 ml d'une solution 0,09 M de n-propoxyde de zirconium (IV) dans de l'éthanol, ce qui correspond à un rapport molaire eau: propoxyde de zirconium égal à 5,6 (ou 1,4 fois la valence du zirconium).

On a fait subir au mélange réactionnel un mûrissage de 2 heures sous agitation lente.

La figure 2 représente un échantillon de la poudre d'oxyde de zirconium recueillie à l'issue du mûrissage.

La figure 3 représente un autre échantillon de la poudre, après que celle-ci ait été lavée avec de l'éthanol anhydre, puis séchée dans un courant d'air à température ambiante.

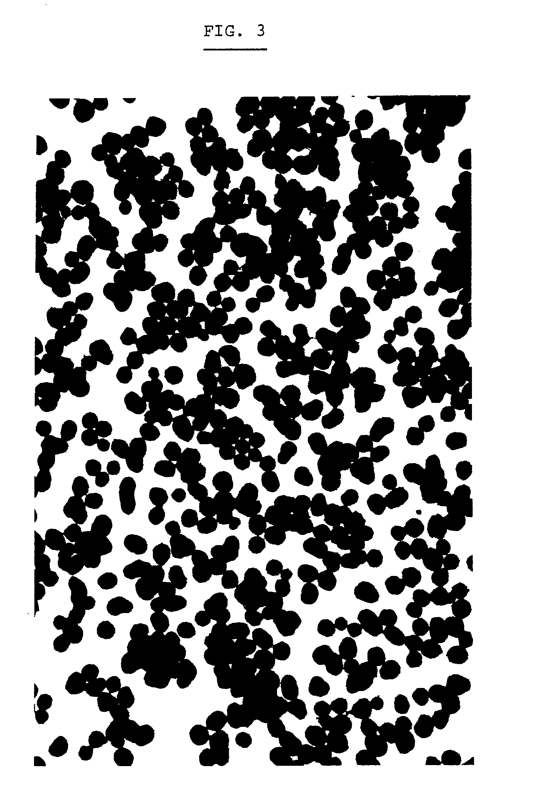

Une comparaison de la figure 1 avec les figures 2 et 3 montre le progrès apporté par l'invention en ce qui concerne l'absence d'agglomérats et la forme régulière, sphérique des particules d'oxyde de zirconium.

**Revendications**

1. Procédé de fabrication d'une poudre pour matériaux céramiques, contenant au moins un oxyde métallique, selon lequel on traite une solution organique d'au moins un alcoolate métallique avec de l'eau dans des conditions réglées pour précipiter l'oxyde métallique à l'état d'une poudre, caractérisé en ce que le rapport molaire entre la quantité d'eau et la quantité d'alcoolate métallique mises en

oeuvre est compris entre 0,5 et 0,9 fois la valence du métal de l'alcoolate métallique, et en ce que, pour traiter l'alcoolate métallique avec l'eau, on ajoute d'abord à l'alcoolate métallique une fraction de la quantité susdite d'eau, on réalise un mélange homogène de l'alcoolate avec ladite fraction d'eau avant qu'une germination débute, on soumet le mélange réactionnel résultant à un mûrissage, puis on lui ajoute le solde de ladite quantité d'eau.

2. Procédé selon la revendication 1, caractérisé en ce qu'on règle la durée du mûrissage pour éviter une précipitation avant l'addition du solde susdit de la quantité d'eau au mélange réactionnel.

3. Procédé selon la revendication 1 ou 2, caractérisé en ce que la fraction précitée de la quantité d'eau est comprise entre 60 et 80 % de ladite quantité d'eau.

4. Procédé selon l'une quelconque des revendications 1 à 3, caractérisé en ce que l'alcoolate métallique et l'eau sont mis en oeuvre à l'état de solutions organiques.

5. Procédé selon la revendication 4, caractérisé en ce qu'on met en oeuvre une solution alcoolique de l'alcoolate contenant entre 0,05 et 1 mole d'alcoolate par litre et une solution alcoolique d'eau contenant entre 0,1 et 3 moles d'eau par litre.

6. Procédé selon l'une quelconque des revendications 1 à 5, caractérisé en ce qu'on sélectionne au moins un alcoolate d'un métal appartenant au groupe III ou IV du tableau périodique des éléments.

7. Procédé selon la revendication 6, caractérisé en ce qu'on met en oeuvre un mélange d'alcoolate de zirconium et d'alcoolate d'yttrium.

## Claims

1. Process for the manufacture of a powder for ceramic materials, containing at least one metal oxide, according to which an organic solution of at least one metal alcoholate is treated with water under controlled conditions to precipitate the metal oxide in the form of a powder, characterised in that the molar ratio of the quantity of water to the quantity of metal alcoholate employed is between 0.5 and 0.9 times the valency of the metal in the metal alcoholate and in that, to treat the metal alcoholate with water, a fraction of the above-mentioned quantity of water is first added to the metal alcoholate, a homogeneous mixture of the alcoholate with the said fraction of water is produced before nucleation commences, the resulting reaction mixture is subjected to maturing, and the remainder of the said quantity of water is then added to it.

2. Process according to Claim 1, characterised in that the maturing period is adjusted to avoid precipitation before the addition of the abovementioned remainder of the quantity of water to the reaction mixture.

3. Process according to Claim 1 or 2, characterised in that the abovementioned fraction of the quantity of water is between 60 and 80% of the said quantity of water.

4. Process according to any one of Claims 1 to 3, characterised in that the metal alcoholate and the water are used in the form of organic solutions.

5. Process according to Claim 4, characterised in that an alcoholic solution of the alcoholate containing between 0.05 and 1 mole of alcoholate per litre and an alcoholic solution of water containing between 0.1 and 3 moles of water per litre are used.

6. Process according to any one of Claims 1 to 5, characterised in that at least one alcoholate of a metal belonging to Group III or IV of the Periodic Table of the elements is chosen.

7. Process according to Claim 6, characterised in that a mixture of zirconium alcoholate and yttrium alcoholate is used.

## Patentansprüche

1. Verfahren zur Herstellung eines Pulvers für keramische Materialien, das wenigstens ein Metalloxid enthält, gemäß dem man unter bestimmten Bedingungen eine organische Lösung von wenigstens einem Metallalkoholat mit Wasser behandelt, um das Metalloxid im Pulverzustand auszufällen, dadurch gekennzeichnet, daß das molare Verhältnis zwischen den eingesetzten Mengen an Wasser und an Metallalkoholat zwischen 0,5 und 0,9 mal die Wertigkeit des Metalls des Metallalkoholats beträgt und, daß man, um das Metallalkoholat mit Wasser zu behandeln, dem Metallalkoholat zuerst einen Teil der obengenannten Wassermenge zufügt, eine homogene Mischung des Alkoholats mit dem genannten Wasseranteil herstellt, bevor eine Keimbildung beginnt, die daraus resultierende Reaktionsmischung einer Reifung unterzieht und dann den Rest der genannten Wassermenge zufügt.

2. Verfahren nach Anspruch 1, dadurch gekennzeichnet, daß man die Dauer des Reifens einstellt, um eine Ausfällung vor dem Zufügen des Restes der genannten Wassermenge zu der Reaktionsmischung zu vermeiden.

3. Verfahren nach Anspruch 1 oder 2, dadurch gekennzeichnet, daß der obengenannte Teil der Wassermenge zwischen 60 und 80% der genannten Wassermenge beträgt.

4. Verfahren nach einem der Ansprüche 1 bis 3, dadurch gekennzeichnet, daß das Metallalkoholat und das Wasser als organische Lösungen eingesetzt werden.

5. Verfahren nach Anspruch 4, dadurch gekennzeichnet, daß man eine alkoholische Lösung des Alkoholats, die zwischen 0,05 und 1 Mol Alkoholat pro Liter enthält und eine alkoholische Lösung von Wasser, die zwischen 0,1 und 3 Mol Wasser pro Liter enthält, einsetzt.

6. Verfahren nach einem der Ansprüche 1 bis 5, dadurch gekennzeichnet, daß man wenigstens ein Alkoholat eines Metalls der Gruppe III oder IV der Tabelle des periodischen Systems auswählt.

7. Verfahren nach Anspruch 6, dadurch gekennzeichnet, daß man eine Mischung von Zirkoniumalkoholat und Yttriumalkoholat einsetzt.

FIG. 1

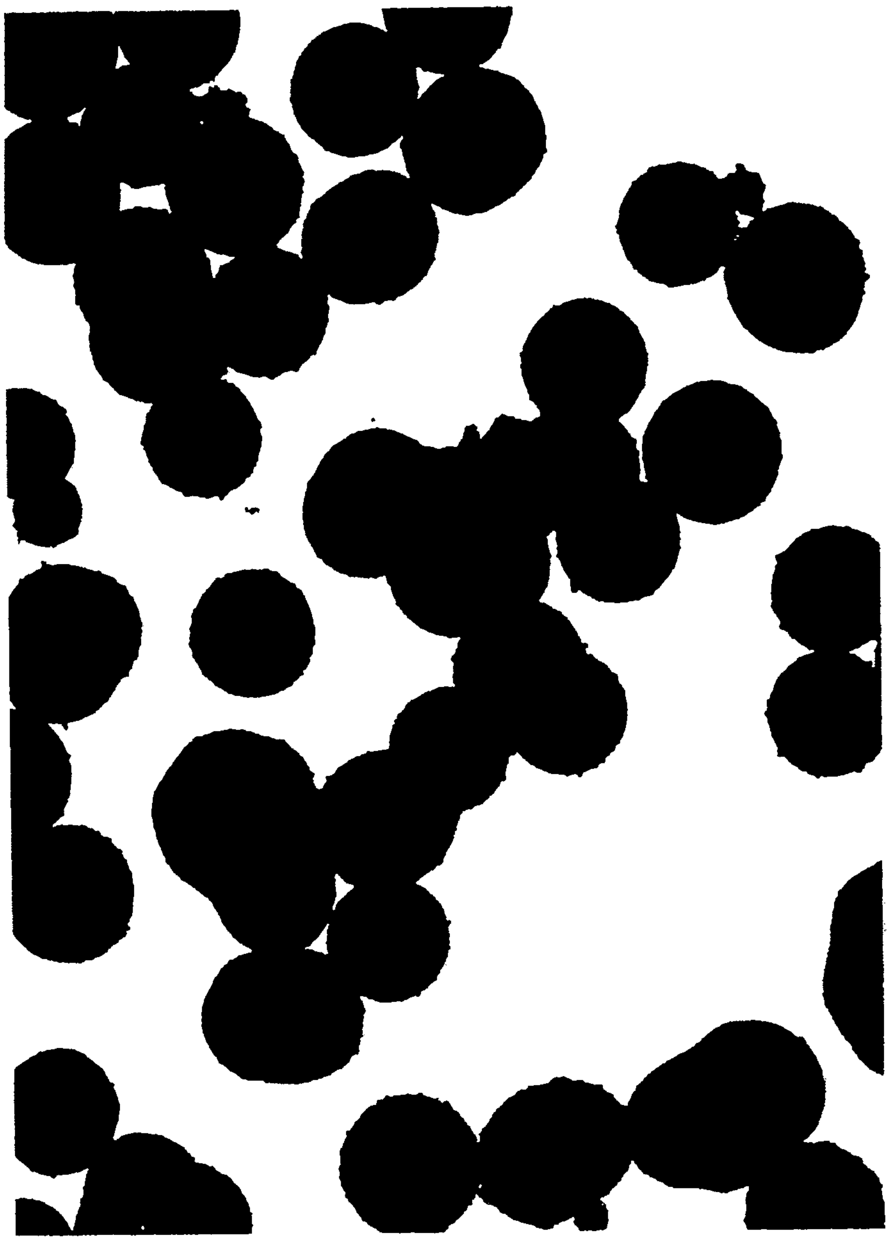

FIG. 2

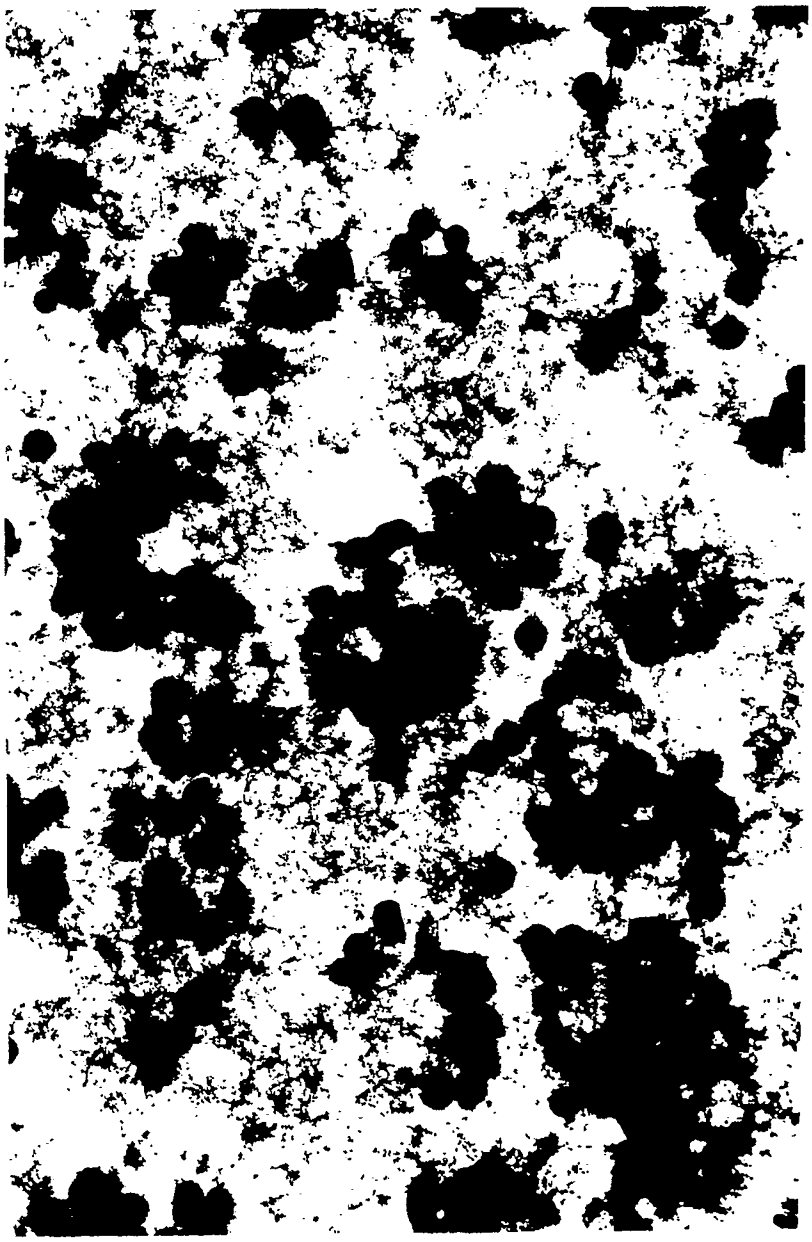

FIG. 3